# EUROPEAN PATENT SPECIFICATION

(11) **EP 1 052 854 B1**
(45) Date of publication and mention of the grant of the patent: **29.01.2003**
(21) Application number: 00303829.6
(22) Date of filing: 08.05.2000
(51) Int. Cl.: H04N 7/173

(54) **Interactive television broadcast system**
Interaktives Fernsehrundfunksystem
Système de télédiffusion de télévision interactive

(30) Priority: 12.05.1999 EP 99303717
(43) Date of publication of application: 15.11.2000
(73) Proprietor: Two Way TV Limited, Avonmore Road, London W14 8TS (GB)
(72) Inventor: Kydd, Richard Andrew, Twickenham, Middlesex TW2 5TT (GB)
(74) Representative: Skone James, Robert Edmund

(56) References cited:
- EP-A- 0 854 645
- WO-A-00/16552
- US-A- 5 734 720
- US-A- 5 778 181

## Description

The invention relates to an interactive television broadcast system and to a remote receiving unit for use in such a system.

Interactive television broadcast systems have been developed to enable remote users to play interactive games, take part in business transactions, bet on broadcast sports events and the like. In many cases, the interactive application relates to a television program which is being broadcast simultaneously. Although such systems have been developed based on analogue techniques, the recent introduction of digital TV networks substantially increases the range and sophistication of applications which are offered.

EP-A-0854645 discloses an electronic television program guide system in which each remote unit is provided with a platform which can implement an electronic programming guide by accessing a program listing from a remote database. The electronic programming guide includes a profile database that stores a viewer profile and a suggest module that is coupled to the profile database. In use, when a user has selected a particular channel, the platform can obtain data via the Internet relevant to that channel for displaying with the channel display.

Television broadcasters and interactive application providers need to obtain accurate viewing figures. Historically, viewing figures have been based on small statistical samples which have either been obtained by physical interview with viewers, the returning of questionnaires by viewers, or in some cases installation of special equipment in a small number of homes to gather the information. The use of a small number of samples is not accurate as it does not represent the actual viewing population but the provision of special equipment to every viewer is undesirable.

US5,734,720 describes a system for scheduling video programmes and other broadcast data. Feedback paths are provided in order to allow modification of the scheduling based upon the viewing of the programmes by customers.

In accordance with the present invention as set out in claims 1 and 11, an interactive television broadcast system comprises a source for broadcasting a plurality of television channels and data, the data including a URL; and a plurality of remote receiving units, each unit including a tuner to enable the unit to be tuned to receive a selected TV channel broadcast by the source, characterised in that the system includes a common data collector, and in that each remote receiving unit includes a processor arranged to use the URL received from the source to access a program which, when implemented, causes the processor to monitor the receiving unit to monitor the channel to which the unit is tuned and to generate corresponding monitored information, and a transmitter for sending the monitored information relating to the channel to which the unit is tuned to the common data collector.

We have realised that it is possible to utilize the remote receiving units which are already needed for handling interactive applications so as also to provide viewing figure information. Since every location which takes part in an interactive application must have its own remote receiving unit, it is possible quickly to provide without any additional user intervention a very accurate measure of actual viewing figures by using these remote receiving units. The method has a much faster turnaround time than previous methods and provides figures representative of the actual population. It is also possible to monitor in-break user responses, for example to determine how many people are watching a specific advertisement and if they change channels during an advert break.

There are a variety of ways in which the system can be implemented within the remote receiving units. In one case, each unit includes a program store for storing a program which when implemented by the processor causes the processor to determine the channel to which the unit is tuned. In this case, the source simply needs to transmit a trigger signal to cause the program to be implemented. The trigger signal could typically be broadcast to all remote receiving units in real time by the source operator although in other cases the trigger could be activated at predetermined times. In the latter case, the trigger signal could be transmitted at those predetermined times from the source or alternatively the source could supply information defining the predetermined time to each remote receiving unit where it is stored, the local processor then carries out the channel determination when the local time is the same as the stored time.

The processor is programmed to respond to a URL (uniform resource locator) sent by the source, the processor using the URL to access via the Internet a program to which it responds to determine the channel to which the unit is tuned. This approach uses an Internet based system in which the processor accesses a web page defined by the URL, the web page holding program code or other data which causes the local processor to determine the channel information.

The advantage of this approach is that mechanisms have already been proposed by standards bodies such as ATVEF (Advanced TV Enhancements Forum) for broadcasting URL triggers to remote receiving units. In these proposals, however, the triggers have been exclusively used automatically to load graphical applications and the like to enhance the TV broadcast.

A further advantage of the invention is that when used in connection with interactive advertising applications, it is possible to determine not only the number of viewers who respond to advertisements (as is already carried out), but also the total number of actual viewers of the advertisement.

As explained above, usually each processor will respond to the data from the source in real time but it is also possible for the processor to respond after a time interval (for example at a predetermined time) and of course the data obtained can either be transmitted immediately to the common data collector or stored for later transmission.

The information may include one or more of
a) the channel to which the unit is currently tuned;
b) the duration for which the unit is actively tuned to a channel;
c) the identity of the unit; and
d) the identity of a user of the unit.

The invention is applicable to any form of transmission network and to systems which broadcast over more than one type of network. In addition, the invention is applicable to broadcast and transmission over the Internet.

Each transmitter is either permanently connected or connectable to a transmission medium which may be selected from one or more of terrestrial, cable, satellite, public switched telephone network (PSTN), or the Internet.

The transmitter may transmit over the same or a different network to that from which the TV broadcast and data is received from the source.

The common data collector may be positioned at the same location of the source although this is not necessary and the returned information can be addressed to another location on the network that is used.

The remote receiving unit may be implemented as a set top box or integrated into a television set.

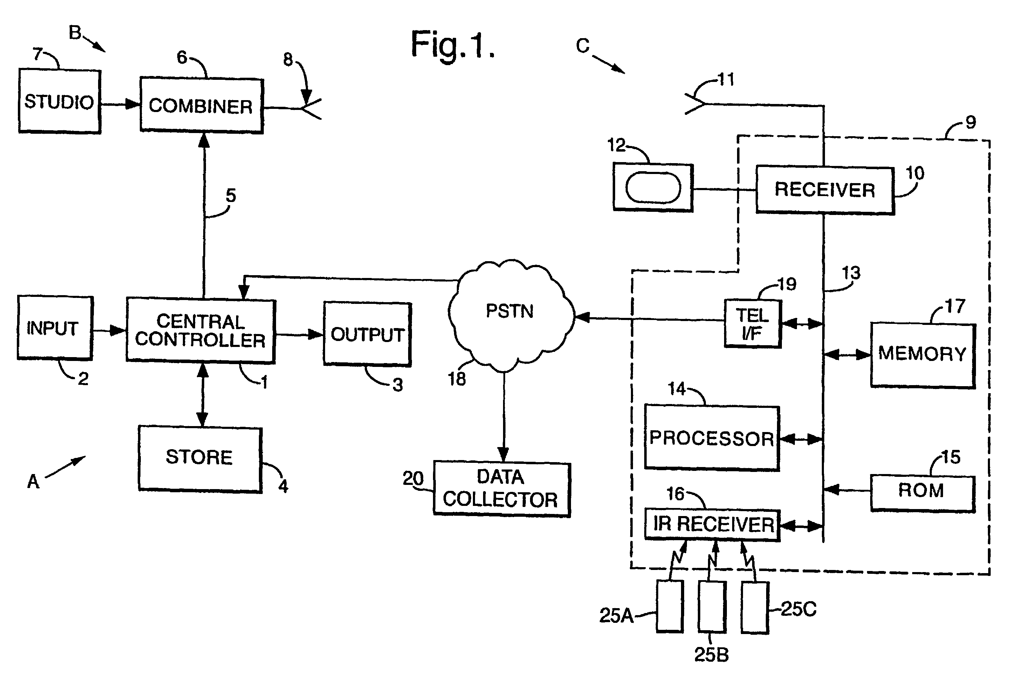

An example of an interactive television broadcast system according to the invention will now be described with reference to the accompanying drawing, in which:-
Figure 1 is a schematic diagram of the system.

The interactive TV broadcast system shown in Figure 1 comprises a game control system A at a central site and including a central controller 1 which will include a computer such as a PC operating a Windows based system, connected to an input device 2 such as a keyboard and/or mouse and the like and to an output device 3 which may include a monitor and/or printer. A store 4 contains a database storing data relating to service functions and remote users, which can be accessed and amended by the central controller 1, and a Live File store storing application data relating to the game/application being or to be broadcast. The central controller 1 generates data which can be converted to TV display signals and other control signals associated with various service functions, on a land line 5 connected to a combining unit 6 defining an insertion point of a TV broadcast source B. The combining unit 6 receives television broadcast signals from a studio 7 (or outside broadcast (OB) location, in the case of a live event), and combines these with the signals on the line 5 so that they are transmitted simultaneously by a transmitter 8 to remote users or players C. In other applications, the signals from the central controller 1 and the studio or OB 7 will be transmitted separately.

The signals applied to the combiner 6 may be transmitted to the remote units within a vertical blanking interval (VBI) of the normal TV signal or on a separate radio FM-SCA channel or other data format such as a cable modem, satellite or the Internet. Typically, the transmitted signals will be in digital form but the invention is also applicable to analogue signals.

Each remote user C has a home or remote receiving unit 9 formed by a Set Top Box (STB) having a tunable television receiver 10 connected to an aerial 11 and a monitor 12. The home unit 9 includes an address/databus 13 connected to the receiver 10, the bus 13 being connected to a microprocessor 14, a memory 15, such as a ROM, storing program instructions for the processor 14, an infra-red receiver 16, and a memory (RAM) 17. Signals transmitted by the processor 14 can be communicated to the central controller 1 or to a data collector 20 via a PSTN 18 which is selectively accessed by a telephone interface unit 19 connected to the bus 13.

Alternative media such as cable or the Internet can be used for the return signals (as for the signals transmitted to the remote unit C). In general the return signals will be transmitted over a different medium to the incoming signals.

The game control system A can be used to control a variety of games including interactive, predictive games and two examples of such interactive, predictive games are described in EP-A-0873772. In the first example, PlayLive® Football, the remote players are able to attempt to predict certain events prior to commencement of a live football match which is broadcast by the transmitter 8 and can also attempt to predict certain events during the live broadcast. In the second example, a predictive game for use with broadcast horse racing is described.

In order to enable users to communicate with the STB 9, each user has a handset 25A, 25B, 25C which is physically separate from the STB 9 but can communicate with the IR receiver 16 of the STB 9 via signals generated in the infra-red waveband. The IR receiver 16 then converts those signals for supply to the processor 14 along the data bus 13. This is described in more detail in EP-A-0921657.

In use, the remote user uses his handset 25A-25C to select a channel which he wishes to view, the processor 14 responding to the selection to cause the receiver 10 to tune to the appropriate channel. In addition, the user can use the handset 25A-25C to select an interactive application such as a game which he can play simultaneously with the television broadcast.

In the preferred embodiment, the ROM 15 stores program data allowing the processor 14 to act as a Java Script handler. When the system operator wishes to obtain information relating to viewing figures, he causes the central controller 1 to issue an "Announcement Message" which is broadcast by the combiner 6 to all STBs 9. The Announcement Message contains a URL link to which the processor 14 in each STB 9 can respond. The use of Announcement Messages containing URL links is already known and is conventionally used to enable the processor 14 to access one or more web pages the contents of which are then downloaded for display. Conventionally this has been used to enable a viewer to see additional information relating to a television program which he is currently watching and to which the receiver is tuned. Thus, the Announcement Message contains information defining the channel to which it relates and a URL. In some cases, the Announcement Message is implemented immediately. In other cases, however, the Announcement Message will contain a start time so that it can be acted upon at a future time or it may contain a duration (or finish) time allowing the announcement message to be acted upon at any time during that duration, or a start time and a duration time. This latter feature means that if the user switches to the channel to which the Announcement Message relates while the duration period is still active, then the appropriate URL link will be acted upon.

In this embodiment of the present invention, the URL contained in the Announcement Message links to an in-band "hidden viewing figures capture page". This page contains code which when downloaded to the processor 14 causes the processor to capture viewing information (current channel, current time, subscriber name etc.) and then to return the information to the data collector 20.

When the Announcement Message is received (in the case of a real time or live Announcement Message) or when the start time of a received Announcement Message is reached, and if the receiver 10 is tuned to the correct channel, the processor 14 will respond to the Announcement Message by accessing the hidden page. Rather than causing a display on the monitor 12, the content of the hidden page will be downloaded causing the processor 14 to generate a message relating to viewing information which is transmitted via the interface 19 to the data collector 20.

At a minimum, the methods described above will monitor the channel to which the receiver 10 is tuned, whether or not the television 12 itself is switched on or off. This will be acceptable in many cases where viewers will switch off the STB 9 when they are not viewing. The processor 14 can easily determine whether or not the STB 9 is switched on or off. If it is possible for the STB 9 to be left on while the televison 12 is switched off, then the processor 14 can be programmed to monitor activity of users, for example, the length of time since the last command was issued by a handset 25A-25C. If this time exceeds a predetermined threshold, then the processor 14 will assume that the channel is no longer being viewed.

In other cases, the television 12 may be switched on/off via the STB 9, in which case the processor 14 can monitor the on/off control signals.

In a more sophisticated approach, signals from individual handsets 25A-25C could be individually monitored so that the processor 14 can return data to the data collector 20 indicating specific user's viewing habits.

## Claims

1. An interactive television broadcast system comprising: a source (1-8) for broadcasting a plurality of television channels and data, the data including a URL; and a plurality of remote receiving units (9), each unit including a tuner (10) to enable the unit to be tuned to receive a selected TV channel broadcast by the source, **characterised in that** the system includes a common data collector (20), and **in that** each remote receiving unit (9) includes a processor (14) arranged to use the URL received from the source to access a program which, when implemented, causes the processor (14) to monitor the receiving unit (9) to monitor the channel to which the unit is tuned and to generate corresponding monitored information, and a transmitter (19) for sending the monitored information relating to the channel to which the unit is tuned to the common data collector (20).

2. A system according to claim 1, wherein each unit includes a program store (17) for storing the program which when implemented by the processor (14) causes the processor to monitor the channel to which the unit is tuned.

3. A system according to claim 1 or claim 2, wherein each processor (14) is adapted to respond to the data from the source in real time.

4. A system according to any of the preceding claims, wherein the source is adapted to transmit the TV broadcast and data over one or more of a terrestrial, cable, satellite network or the internet.

5. A system according to any of the preceding claims, wherein each transmitter (19) is connected or connectable to a transmission medium selected from one or more of terrestrial, cable, satellite, PSTN networks or the internet.

6. A system according to any of the preceding claims, wherein each transmitter (19) is connected or connectable to the same network as that over which the unit received the TV broadcast and data from the source.

7. A system according to any of the preceding claims, wherein each processor (14) is adapted to implement a plurality of interactive applications received from the source.

8. A system according to any of the preceding claims, wherein the common data collector (20) is positioned at the same location as the source.

9. A system according to any of the preceding claims, wherein the monitored information includes one or more of
a) the channel to which the unit is currently tuned;
b) the duration for which the unit is actively tuned to a channel;
c) the identity of the unit; and
d) the identity of a user of the unit.

10. A system according to claim 1, wherein the monitored information is monitored at a predetermined time or during a predetermined time period following the access of the URL by the processor.

11. A remote receiving unit for use in an interactive TV broadcast system according to any of the preceding claims, the remote receiving unit including a tuner (10) to enable the unit to be tuned to receive a selected TV channel broadcast by the source; a processor (14) arranged to use the URL received from the source to access a program which, when implemented, causes the processor (14) to monitor the remote receiving unit to monitor the channel to which the unit is tuned and to generate corresponding monitored information; and a transmitter (19) for sending the monitored information relating to the channel to which the unit is tuned to the common data collector (20).

## Patentansprüche

1. Ein interaktives Fernsehsendesystem, umfassend:
eine Quelle (1-8) zum Senden einer Mehrzahl Fernsehkanäle und Daten, wobei die Daten eine URL-Adresse umfassen; und eine Mehrzahl Fern-Empfangseinheiten (9), wobei jede Einheit einen Tuner (10) umfaßt, um es der Einheit zu ermöglichen, abgestimmt zu werden, um einen ausgewählten Fernsehkanal zu empfangen, der von der Quelle gesendet wird, **dadurch gekennzeichnet, daß** das System einen gemeinsamen Datensammler (20) umfaßt und daß jede Fern-Empfangseinheit (9) einen Prozessor (14) umfaßt, der angeordnet ist, die von der Quelle empfangene URL-Adresse zu verwenden, um auf ein Programm zuzugreifen, das, wenn es implementiert ist, den Prozessor (14) veranlaßt, die Empfangseinheit (9) zu überwachen, um den Kanal zu überwachen, auf den die Einheit abgestimmt ist und entsprechende überwachte Informationen zu erzeugen, sowie einen Sender (19) zum Senden der überwachten Informationen, die den Kanal betreffen, auf den die Einheit abgestimmt ist, an den gemeinsamen Datensammler (20).

2. Ein System gemäß Anspruch 1, wobei jede Einheit einen Programmspeicher (17) zum Speichern des Programms umfaßt, das, wenn es durch den Prozessor (14) implementiert ist, den Prozessor veranlaßt, den Kanal zu überwachen, auf den die Einheit abgestimmt ist.

3. Ein System gemäß Anspruch 1 oder Anspruch 2, wobei jeder Prozessor (14) ausgebildet ist, um auf die Daten von der Quelle in Echtzeit zu reagieren.

4. Ein System gemäß einem der vorangegangenen Ansprüche, wobei die Quelle ausgebildet ist, um die Fernsehsendung und die Daten über ein terrestrisches, ein Kabel-, ein Satellitennetzwerk und/oder das Internet zu senden.

5. Ein System gemäß einem der vorangegangenen Ansprüche, wobei jeder Sender (19) mit einem Sendemedium verbunden oder verbindbar ist, das aus einem terrestrischen, einem Kabel-, einem Satelliten-, einem PSTN-Netzwerk und/oder dem Internet ausgewählt ist.

6. Ein System gemäß einem der vorangegangenen Ansprüche, wobei jeder Sender (19) mit dem gleichen Netzwerk verbunden oder verbindbar ist wie das, über das die Einheit die Fernsehsendung und die Daten von der Quelle empfangen hat.

7. Ein System gemäß einem der vorangegangenen Ansprüche, wobei jeder Prozessor (14) angepaßt ist, um eine Mehrzahl interaktiver Anwendungen zu implementieren, die von der Quelle empfangen werden.

8. Ein System gemäß einem der vorangegangenen Ansprüche, wobei der gemeinsame Datensammler (20) am gleichen Ort wie die Quelle positioniert ist.

9. Ein System gemäß einem der vorangegangenen Ansprüche, wobei die überwachten Informationen eine oder mehrere der folgenden umfassen:
a) den Kanal, auf den die Einheit gegenwärtig abgestimmt ist;
b) die Dauer, über die die Einheit aktiv auf einen Kanal abgestimmt ist;
c) die Identität der Einheit; und
d) die Identität eines Benutzers der Einheit.

10. Ein System gemäß Anspruch 1, wobei die überwachten Informationen zu einer vorbestimmten Zeit oder während einer vorbestimmten Zeitperiode überwacht werden, die auf den Zugriff auf die URL-Adresse durch den Prozessor folgt.

11. Eine Fern-Empfangseinheit zur Verwendung in einem interaktiven Fernsehsendesystem gemäß einem der vorangegangenen Ansprüche, wobei die Fern-Empfangseinheit einen Tuner (10) umfaßt, um es der Einheit zu ermöglichen, abgestimmt zu werden, um einen ausgewählten Fernsehkanal zu empfangen, der von der Quelle gesendet wird; einen Prozessor (14), der angeordnet ist, um die von der Quelle empfangene URL-Adresse zu verwenden, um auf ein Programm zuzugreifen, das, wenn es implementiert wird, den Prozessor (14) veranlaßt, die Fern-Empfangseinheit zu überwachen, um den Kanal zu überwachen, auf den die Einheit abgestimmt ist, und um entsprechende überwachte Informationen zu erzeugen; und einen Sender (19) zum Senden der überwachten Informationen betreffend den Kanal, auf den die Einheit abgestimmt ist, an den gemeinsamen Datensammler (20).

## Revendications

1. Système de télédiffusion de télévision interactive comprenant :
une source (1-8) pour diffuser une pluralité de canaux de télévision et de données, les données comprenant une URL ; et une pluralité d'unités de réception distantes (9), chaque unité comprenant un sélecteur de canaux (10) pour permettre à l'unité d'être accordée pour recevoir un programme d'une chaîne de télévision sélectionnée par la source, **caractérisé en ce que** le système comprend un collecteur commun de données (20), et **en ce que** chaque unité de réception distante (9) comprend un processeur (14) conçu pour utiliser l'URL reçue depuis la source pour accéder à un programme qui, lorsqu'il est exécuté, amène le processeur (14) à surveiller l'unité de réception (9) pour surveiller le canal sur lequel l'unité est accordée et pour générer des informations surveillées correspondantes, et un émetteur (19) pour envoyer les informations surveillées se rapportant au canal sur lequel l'unité est accordée au collecteur commun de données (20).

2. Système selon la revendication 1, dans lequel chaque unité comprend une mémoire de programme (17) pour mémoriser le programme qui, lorsqu'il est mis en oeuvre par le processeur (14), amène le processeur à surveiller le canal sur lequel l'unité est accordée.

3. Système selon la revendication 1 ou 2, dans lequel chaque processeur (14) est adapté pour répondre aux données depuis la source, en temps réel.

4. Système selon l'une quelconque des revendications précédentes, dans lequel la source est conçue pour transmettre le programme de télévision et les données sur un ou plusieurs réseaux terrestres, par câble, satellite ou l'Internet.

5. Système selon l'une quelconque des revendications précédentes, dans lequel chaque émetteur (19) est connecté ou connectable à un support de transmission sélectionné parmi un ou plusieurs des réseaux terrestres, par câble, satellite, RTPC ou l'Internet.

6. Système selon l'une quelconque des revendications précédentes, dans lequel chaque émetteur (19) est connecté ou connectable au même réseau que celui sur lequel l'unité a reçu la télédiffusion de télévision et les données depuis la source.

7. Système selon l'une quelconque des revendications précédentes, dans lequel chaque processeur (14) est conçu pour mettre en oeuvre une pluralité d'applications interactives reçues depuis la source.

8. Système selon l'une quelconque des revendications précédentes, dans lequel le collecteur commun de données (20) est positionné sur le même emplacement que la source.

9. Système selon l'une quelconque des revendications précédentes, dans lequel les informations surveillées comprennent un ou plusieurs éléments parmi
a) le canal sur lequel l'unité est actuellement accordée ;
b) la durée pendant laquelle l'unité est activement accordée sur un canal ;
c) l'identité de l'unité ; et
d) l'identité d'un utilisateur de l'unité.

10. Système selon la revendication 1, dans lequel les informations surveillées sont surveillées à un temps prédéterminé ou pendant une période prédéterminée après l'accès à l'URL par le processeur.

11. Unité de réception distante pour utilisation dans un système de télédiffusion de télévision interactive selon l'une quelconque des revendications précédentes, l'unité de réception distante comprenant un sélecteur de canaux (10) pour permettre à l'unité d'être accordée pour recevoir un canal de télévision sélectionné diffusé par la source ; un processeur (14) conçu pour utiliser l'URL reçue depuis la source pour accéder à un programme qui, lorsqu'il est mis en oeuvre, amène le processeur (14) à surveiller l'unité de réception distante pour surveiller le canal sur lequel l'unité est accordée et pour générer des informations surveillées correspondantes ; et un émetteur (19) pour envoyer les informations surveillées se rapportant au canal sur lequel l'unité est accordée au collecteur commun de données (20).
